# EUROPÄISCHE PATENTANMELDUNG

(11) **EP 3 046 210 A1**
(43) Veröffentlichungstag der Anmeldung: **20.07.2016**
(21) Anmeldenummer: 15151279.5
(22) Anmeldetag: 15.01.2015
(51) Int. Cl.: H02J 7/00, H02J 3/32

(54) **Anordnung und Verfahren zum Regeln einer elektrischen Ausgangsleistung einer Energieerzeugungseinheit**

(71) Anmelder: Siemens Aktiengesellschaft, 80333 München (DE)
(72) Erfinder: Heue, Matthias, 44879 Bochum (DE); Winkel, Michael, 46284 Dorsten (DE)

(57) **Zusammenfassung**

Die Erfindung betrifft eine Anordnung zum Regeln einer elektrischen Ausgangsleistung einer Energieerzeugungseinheit, wobei die Anordnung eingerichtet ist, die Ausgangsleistung in Abhängigkeit einer Regelabweichung zwischen einem einem vorgegebenen Energiesollverlauf entnommenen momentanen Soll-Energiewert und einem momentanen Ist-Energiewert einer von der Energieerzeugungseinheit erzeugten elektrischen Energie zu regeln.

## Beschreibung

Die Erfindung betrifft eine Anordnung und ein Verfahren zum Regeln einer elektrischen Ausgangsleistung einer Energieerzeugungseinheit.

Energieerzeugungseinheiten zum Erzeugen von elektrischer Energie sind in vielfältigen Ausführungsformen bekannt. Die von einer Energieerzeugungseinheit erzeugte elektrische Energie kann in ein Netz eingespeist werden.

Am Strommarkt finden verschiedene Vermarktungsmodelle Anwendung. Beispielsweise kann eine Energiemenge, die in einem vorgegebenen Zeitintervall erzeugt wird, vermarktet werden. Ein solches Zeitintervall ist auch unter der Bezeichnung "Zeitscheibe" bekannt.

Ein Netzbetreiber kann für eine Bereitstellung von elektrischer Energie einen Fahrplan erstellen, an den sich Energieerzeuger, die ihre elektrische Energie in ein von dem Netzbetreiber betriebenes Netz einspeisen, halten sollen. Speist ein Energieerzeuger nicht die vermarktete elektrische Energiemenge, sondern entweder mehr oder weniger elektrische Energie in einer Zeitscheibe in das Netz ein, müssen andere in das Netz einspeisende Energieerzeuger die jeweilige Abweichung ausgleichen. Das Abweichen von der vermarkteten elektrischen Energiemenge wird häufig von dem Netzbetreiber finanziell bestraft.

Bisher versuchen Energieerzeuger, einen einem Leistungsregler zuführbaren Soll-Ausgangsleistungswert einer Energieerzeugungseinheit derart darzustellen, dass die vermarktete Energiemenge erzeugt wird. Es werden hierbei Energiemengen vermarktet, die erfahrungsgemäß bei bestimmten Betriebszuständen einer Energieerzeugungseinheit, wie beispielsweise einem Anfahren, einem Abfahren oder im Leistungsbetrieb, erzeugt werden.

Aufgabe der Erfindung ist es, einen Betrieb einer Energieerzeugungseinheit dahingehend zu verbessern, dass mit ihr eine vorgegebene Energiemenge möglichst exakt erzeugbar ist.

Die erfindungsgemäße Anordnung zum Regeln einer elektrischen Ausgangsleistung einer Energieerzeugungseinheit ist eingerichtet, die Ausgangsleistung in Abhängigkeit einer Regelabweichung zwischen einem einem vorgegebenen Energiesollverlauf entnommenen momentanen Soll-Energiewert und einem momentanen Ist-Energiewert einer von der Energieerzeugungseinheit erzeugten elektrischen Energie zu regeln.

Erfindungsgemäß erfolgt eine Regelung der elektrischen Ausgangsleistung der Energieerzeugungseinheit unter Berücksichtigung eines vorgegebenen Energiesollverlaufs bzw. der daraus entnommenen momentanen Soll-Energiewerte. Bei einer Abweichung eines momentanen Ist-Energiewertes von einem momentanen Soll-Energiewert kann die Ausgangsleistung der Energieerzeugungseinheit dahingehend verändert werden, dass die vorgegebene Energiemenge exakt erzeugt wird. Hierdurch können finanzielle Bestrafungen von Energieerzeugern durch Netzbetreiber vermieden werden, die durch Abweichungen von der vorgegebenen Energiemenge bedingt sind.

Der Energiesollverlauf kann durch einen Verlauf einer zu erzeugenden elektrischen Energie innerhalb einer Zeitscheibe gegeben sein. Der Energiesollverlauf kann unter Berücksichtigung technischer Restriktionen und/oder bestimmter Betriebszustände der Energieerzeugungseinheit erstellt werden.

Mit der erfindungsgemäßen Anordnung können Störungen, die den Ist-Ausgangsleistungsverlauf der Energieerzeugungseinheit beeinflussen, im weiteren Verlauf der Energieerzeugung ausgeglichen werden. Wird beispielsweise durch eine Störung die Ist-Ausgangsleistung der Energieerzeugungseinheit herabgesetzt, kann die Ist-Ausgangsleistung im weiteren Verlauf einer Zeitscheibe derart erhöht werden, dass trotz der Störung die vorgegebene Energiemenge exakt erzeugt wird. Wird hingegen durch eine Störung die Ist-Ausgangsleistung der Energieerzeugungseinheit erhöht, kann die Ist-Ausgangsleistung im weiteren Verlauf einer Zeitscheibe derart herabgesetzt werden, dass trotz der Störung die vorgegebene Energiemenge exakt erzeugt wird.

Die Energieerzeugungseinheit kann wenigstens einen Generator, insbesondere eines Gas-und-Dampfturbinen-Kraftwerks oder einer Anlage zur Erzeugung erneuerbarer Energie, wenigstens eine Brennstoffzelle oder dergleichen aufweisen.

Bevorzugt umfasst die Anordnung wenigstens einen Integrator, dem eine momentane Ist-Ausgangsleistung der Energieerzeugungseinheit als Eingangssignal zuführbar ist und mit dem der momentane Ist-Energiewert erzeugbar ist, und wenigstens einen Energieregler, dem der momentane Ist-Energiewert als Regelgröße und der momentane Soll-Energiewert als Führungsgröße zuführbar sind und mit dem in Abhängigkeit einer Regelabweichung zwischen dem momentanen Soll-Energiewert und dem momentanen Ist-Energiewert eine Stellgröße erzeugbar ist, die mit einem Soll-Ausgangsleistungswert, der einem Leistungsregler der Energieerzeugungseinheit als Führungsgröße zuführbar ist, mit der dem Leistungsregler als Regelgröße zuführbaren, momentanen Ist-Ausgangsleistung der Energieerzeugungseinheit und/oder mit einer Leistungsstellgröße, die von dem Leistungsregler in Abhängigkeit einer Regelabweichung zwischen der Soll-Ausgangsleistung und der momentanen Ist-Ausgangsleistung der Energieerzeugungseinheit erzeugbar ist, verknüpfbar ist. Der Energieregler kann als PI-Regler ausgebildet sein. Mit dem Integrator kann die in einem bestimmten Zeitraum von der Energieerzeugungseinheit erzeugte und abgegebene Ausgangsleistung über die Zeit integriert werden, wodurch der momentane Ist-Energiewert erzeugbar ist. Dieser wird in dem Energieregler mit dem momentanen Soll-Energiewert verglichen. Anlagen, bei denen ein entsprechender Leistungsregler bereits vorhanden ist, können mit dem Integrator und dem Energieregler auf einfache Art und Weise und kostengünstig nachgerüstet werden. Durch die Verknüpfung der Stellgröße mit dem Soll-Ausgangsleistungswert, der dem Leistungsregler zuführbaren, momentanen Ist-Ausgangsleistung der Energieerzeugungseinheit und/oder der Leistungsstellgröße werden bzw. wird der Soll-Ausgangsleistungswert, die dem Leistungsregler zuführbare, momentane Ist-Ausgangsleistung der Energieerzeugungseinheit bzw. die Leistungsstellgröße variiert, um die erfindungsgemäße Regelung durchführen zu können. Alternativ kann der Leistungsregler ein Teil der Anordnung sein.

Nach dem erfindungsgemäßen Verfahren zum Regeln einer elektrischen Ausgangsleistung einer Energieerzeugungseinheit wird die Ausgangsleistung in Abhängigkeit einer Regelabweichung zwischen einem einem vorgegebenen Energiesollverlauf entnommenen momentanen Soll-Energiewert und einem momentanen Ist-Energiewert einer von der Energieerzeugungseinheit erzeugten elektrischen Energie geregelt.

Mit dem Verfahren sind die oben mit Bezug auf die Anordnung genannten Vorteile entsprechend verbunden. Insbesondere kann die Anordnung zur Durchführung des Verfahrens eingerichtet sein.

Bevorzugt wird durch Integration einer momentanen Ist-Ausgangsleistung der Energieerzeugungseinheit der momentane Ist-Energiewert erzeugt, wobei in Abhängigkeit einer Regelabweichung zwischen dem momentanen Soll-Energiewert und dem momentanen Ist-Energiewert eine Stellgröße erzeugt wird, die mit einem Soll-Ausgangsleistungswert, der einem Leistungsregler der Energieerzeugungseinheit als Führungsgröße zuführbar ist, mit der dem Leistungsregler als Regelgröße zuführbaren, momentanen Ist-Ausgangsleistung der Energieerzeugungseinheit und/oder mit einer Leistungsstellgröße, die von dem Leistungsregler in Abhängigkeit einer Regelabweichung zwischen der Soll-Ausgangsleistung und der momentanen Ist-Ausgangsleistung der Energieerzeugungseinheit erzeugbar ist, verknüpft wird. Mit dieser Ausgestaltung sind die oben mit Bezug auf die entsprechende Ausgestaltung des Verfahrens genannten Vorteile entsprechend verbunden.

Im Folgenden wird die Erfindung unter Bezugnahme auf die anliegende Figur anhand einer bevorzugten Ausführungsform beispielhaft erläutert, wobei die nachfolgend dargestellten Merkmale sowohl jeweils für sich genommen als auch in unterschiedlicher Kombination miteinander einen Aspekt der Erfindung darstellen können. Es zeigt:

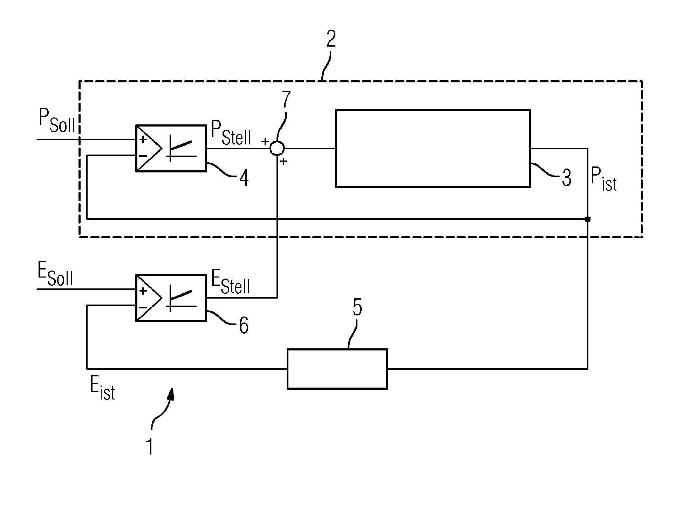

- Fig. 1: eine schematische Darstellung eines Ausführungsbeispiels für eine erfindungsgemäße Anordnung.

Figur 1 zeigt eine schematische Darstellung eines Ausführungsbeispiels für eine erfindungsgemäße Anordnung 1 zum Regeln einer elektrischen Ausgangsleistung einer Energieerzeugungseinheit 2.

Die Energieerzeugungseinheit 2 umfasst eine elektrische Energie erzeugende Einrichtung 3, beispielsweise einen Generator, und einen Leistungsregler 4 in Form eines PI-Reglers.

Dem Leistungsregler 4 sind eine momentane Ist-Ausgangsleistung P_{Ist} der Energieerzeugungseinheit 2 als Regelgröße und ein vorgegebener Soll-Ausgangsleistungswert P_{Soll} als Führungsgröße zuführbar. Mit dem Leistungsregler 4 ist in Abhängigkeit einer Regelabweichung P_{Soll} - P_{Ist} zwischen der Soll-Ausgangsleistung P_{Soll} und der Ist-Ausgangsleistung P_{Ist} eine der Einrichtung 3 zuführbare Leistungsstellgröße P_{Stell} erzeugbar.

Die Anordnung 1 umfasst einen Integrator 5, dem die momentane Ist-Ausgangsleistung P_{Ist} der Energieerzeugungseinheit 2 als Eingangssignal zuführbar ist und mit dem ein momentaner Ist-Energiewert E_{Ist} erzeugbar ist.

Ferner umfasst die Anordnung 1 einen Energieregler 6 in Form eines PI-Reglers, dem der momentane Ist-Energiewert E_{Ist} als Regelgröße und ein einem vorgegebenen Energiesollverlauf entnommener momentaner Soll-Energiewert E_{Soll} als Führungsgröße zuführbar sind und mit dem in Abhängigkeit einer Regelabweichung E_{Soll}-E_{Ist} zwischen dem momentanen Soll-Energiewert E_{Soll} und dem momentanen Ist-Energiewert E_{Ist} eine Stellgröße E_{Stell} erzeugbar ist, die mit der Leistungsstellgröße P_{Stell} über die Verknüpfung 7 verknüpfbar ist.

Die Anordnung 1 ist somit eingerichtet, die Ausgangsleistung der Energieerzeugungseinheit 2 in Abhängigkeit einer Regelabweichung E_{Soll}-E_{Ist} zwischen einem einem vorgegebenen Energiesollverlauf entnommenen momentanen Soll-Energiewert E_{Soll} und einem momentanen Ist-Energiewert E_{Ist} einer von der Energieerzeugungseinheit 2 erzeugten elektrischen Energie zu regeln.

Für den Fachmann ist klar, dass alternativ zu den genannten Regelabweichungen (Soll-Ist) zwischen Soll- und Ist-Werten Regelabweichungen (Ist-Soll) zwischen Ist- und Soll-Werten herangezogen werden können, ohne den Rahmen der Erfindung zu verlassen.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Anordnung (1) zum Regeln einer elektrischen Ausgangsleistung einer Energieerzeugungseinheit (2),
wobei die Anordnung (1) eingerichtet ist, die Ausgangsleistung in Abhängigkeit einer Regelabweichung (E_{Soll}-E_{Ist}) zwischen einem einem vorgegebenen Energiesollverlauf entnommenen momentanen Soll-Energiewert (E_{Soll}) und einem momentanen Ist-Energiewert (E_{Ist}) einer von der Energieerzeugungseinheit (2) erzeugten elektrischen Energie zu regeln.

2. Anordnung (1) gemäß Anspruch 1,
aufweisend wenigstens einen Integrator (5), dem eine momentane Ist-Ausgangsleistung (P_{Ist}) der Energieerzeugungseinheit (2) als Eingangssignal zuführbar ist und mit dem der momentane Ist-Energiewert (E_{Ist}) erzeugbar ist,
und wenigstens einen Energieregler (6), dem der momentane Ist-Energiewert (E_{Ist}) als Regelgröße und der momentane Soll-Energiewert (E_{Soll}) als Führungsgröße zuführbar sind und mit dem in Abhängigkeit einer Regelabweichung (E_{Soll}-E_{Ist}) zwischen dem momentanen Soll-Energiewert (E_{Soll}) und dem momentanen Ist-Energiewert (E_{Ist}) eine Stellgröße (E_{Stell}) erzeugbar ist, die mit einem Soll-Ausgangsleistungswert (P_{Soll}), der einem Leistungsregler (4) der Energieerzeugungseinheit (2) als Führungsgröße zuführbar ist, mit der dem Leistungsregler (4) als Regelgröße zuführbaren, momentanen Ist-Ausgangsleistung (P_{Ist}) der Energieerzeugungseinheit (2) und/oder mit einer Leistungsstellgröße (P_{Stell}), die von dem Leistungsregler (4) in Abhängigkeit einer Regelabweichung (P_{Soll}-P_{Ist}) zwischen der Soll-Ausgangsleistung (P_{Soll}) und der momentanen Ist-Ausgangsleistung (P_{Ist}) der Energieerzeugungseinheit (2) erzeugbar ist, verknüpfbar ist.

3. Verfahren zum Regeln einer elektrischen Ausgangsleistung einer Energieerzeugungseinheit (2),
wobei die Ausgangsleistung in Abhängigkeit einer Regelabweichung (E_{Soll}-E_{Ist}) zwischen einem einem vorgegebenen Energiesollverlauf entnommenen momentanen Soll-Energiewert (E_{Soll}) und einem momentanen Ist-Energiewert (E_{Ist}) einer von der Energieerzeugungseinheit (2) erzeugten elektrischen Energie geregelt wird.

4. Verfahren gemäß Anspruch 3,
wobei durch Integration einer momentanen Ist-Ausgangsleistung (P_{Ist}) der Energieerzeugungseinheit (2) der momentane Ist-Energiewert (E_{Ist}) erzeugt wird, und
wobei in Abhängigkeit einer Regelabweichung (E_{Soll}-E_{Ist}) zwischen dem momentanen Soll-Energiewert (E_{Soll}) und dem momentanen Ist-Energiewert (E_{Ist}) eine Stellgröße (E_{Stell}) erzeugt wird, die mit einem Soll-Ausgangsleistungswert (P_{Soll}), der einem Leistungsregler (4) der Energieerzeugungseinheit (2) als Führungsgröße zuführbar ist, mit der dem Leistungsregler (4) als Regelgröße zuführbaren, momentanen Ist-Ausgangsleistung (P_{Ist}) der Energieerzeugungseinheit (2) und/oder mit einer Leistungsstellgröße (P_{Stell}), die von dem Leistungsregler (4) in Abhängigkeit einer Regelabweichung (P_{Soll}-P_{Ist}) zwischen der Soll-Ausgangsleistung (P_{Soll}) und der momentanen Ist-Ausgangsleistung (P_{Ist}) der Energieerzeugungseinheit (2) erzeugbar ist, verknüpft wird.
